# EUROPÄISCHE PATENTSCHRIFT

(11) **EP 1 593 469 B1**
(45) Veröffentlichungstag und Bekanntmachung des Hinweises auf die Patenterteilung: **08.11.2006**
(21) Anmeldenummer: 04010780.7
(22) Anmeldetag: 06.05.2004
(51) Int. Cl.: B26F 3/12, D06H 7/22

(54) **Thermische Trennschere mit keramischer Halterung**
Heated cutter with a ceramic support
Couteau thermique avec un support en matière céramique

(43) Veröffentlichungstag der Anmeldung: 09.11.2005
(73) Patentinhaber: Gebrüder Loepfe AG, CH-8623 Wetzikon (CH)
(72) Erfinder: Weidmann, Erich, 8623 Wetzikon (CH); Woodtli, Armin, 8600 Dübendorf (CH); Keulen, Marcus, 59425 Unna (DE)
(74) Vertreter: Blum, Rudolf Emil

(56) Entgegenhaltungen:
- CH-A- 680 227
- US-B1- 6 681 668

## Beschreibung

Die Erfindung bezieht sich auf eine Vorrichtung zum Trennen von textilen Flächengebilden, auf eine Webmaschine mit einer derartigen Vorrichtung sowie auf eine Verwendung der Vorrichtung in einer Webmaschine.

Derartige Vorrichtungen sind in der Textilindustrie unter der Bezeichnung thermische Trennscheren oder Kantenschmelzvorrichtungen bekannt. Sie dienen vorwiegend dazu, textile Flächengebilde, d.h. je nach dem angewandten Verfahren Gewebe, Gewirke oder andere Gebilde, in Längsrichtung zu trennen und dabei gleichzeitig den Rand (oder bei Mitteltrennung die verbleibenden Ränder) zu verschweissen.

Eine bekannte Trennschere dieser Art ist in CH 680 227 beschrieben. Sie besitzt eine Halterung aus Metall, in welcher zwei Kontaktelemente angeordnet sind. An den Kontaktelementen ist ein Drahtbügel befestigt, der elektrisch beheizt wird, indem eine Spannung an die Kontaktelemente angelegt wird. Damit die Kontaktelemente nicht kurzgeschlossen werden, sind sie durch geeignete Isolationsmittel gegen die Halterung elektrisch isoliert.

Für einen wirtschaftlichen Einsatz ist es wichtig, dass die Trennscheren bzw. deren Heizdrähte einfach ausgewechselt und installiert werden können. Es ist deshalb Aufgabe der vorliegenden Erfindung, eine Trennschere bereitzustellen, die diese Voraussetzung möglichst weitgehend erfüllt.

Diese Aufgabe wird von der Vorrichtung gemäss Anspruch 1 erfüllt. Anspruchsgemäss weist also die Halterung einen Keramikkörper auf, in welchem die Kontaktelemente gehalten werden. Durch die Verwendung eines Keramikkörpers werden separate Isolationsmittel für die Kontaktelemente unnötig, was die Montage vereinfacht und es erlaubt, die Vorrichtung aus weniger Teilen zu fertigen. Ausserdem besitzt der Keramikkörper die erforderliche Temperaturbeständigkeit, damit er durch die Hitze des Drahtbügels nicht beschädigt wird.

Vorzugsweise ist im Keramikkörper eine Befestigungsöffnung vorgesehen, in welche ein Befestigungsstab eingeführt werden kann. Der Befestigungsstab kann z.B. ein an der Webmaschine angeordneter Stab sein, an welchem die Trennschere montiert werden soll.

Die Halterung umfasst ferner vorzugsweise eine Klemmvorrichtung, z.B. in Form eines Metallblocks mit Loch, und ein Fixierungsmittel, z.B. in Form einer Schraube. Diese sind so ausgestaltet, dass mit dem Fixierungsmittel eine Kraft auf die Klemmvorrichtung ausgeübt werden kann, wodurch die Klemmvorrichtung den in die Befestigungsöffnung eingeführten Befestigungsstab gegen den Rand der Befestigungsöffnung drückt und so festklemmt. Beispielsweise kann hierzu eine Schraube vorgesehen sein, welche am Keramikkörper abgestützt ist. Wird sie angezogen, so wird die Klemmvorrichtung bewegt und klemmt den Befestigungsstab gegen die Ränder der Befestigungsöffnung. Bei einer derartigen Ausgestaltung kann auf ein Gewinde im Keramikkörper verzichtet werden und die Keramik wird nur auf Druck belastet, so dass es auch bei sehr festem Anziehen nicht zu Schäden an der Keramik kommt.

In einer weiteren bevorzugten Ausführung erstrecken sich die Kontaktelemente durch den Keramikkörper. Sie sind an einer ersten Seite des Keramikkörpers mit dem Drahtbügel oder mit Zuführungen zum Drahtbügel verbunden und auf einer zweiten Seite des Keramikkörpers mit Anschlüssen für eine Stromzuführung. Jedes Befestigungselement bildet auf der zweiten Seite eine Gewindestange, auf welcher eine Mutter aufgeschraubt und gegen den Keramikkörper angezogen ist. Auf der ersten Seite ist eine nicht-rotationssymmetrische Ausformung vorgesehen, welche drehfest in einer Vertiefung des Keramikkörpers liegt, so dass das Kontaktelement während dem Anziehen der Mutter drehfest von der Halterung gehalten wird, was das Festziehen der Mutter vereinfacht.

Die Vorrichtung wird vorzugsweise zum Trennen von textilen Flächengebilden in einer Webmaschine eingesetzt. Die Erfindung bezieht sich auch auf diese Verwendung und auf eine entsprechend ausgerüstete Webmaschine.

Weitere bevorzugte Ausführungen der Erfindung ergeben sich aus den abhängigen Ansprüchen und aus der folgenden Beschreibung anhand der Figuren. Dabei zeigen:
Fig. 1 eine Ansicht einer Ausführung der Erfindung,
Fig. 2 die Vorrichtung nach Fig. 1 von der Seite des Drahtbügels,
Fig. 3 eine Ansicht der Vorrichtung von der Querseite, wobei der Keramikkörper entlang Linie III-III von Fig. 2 aufgeschnitten wurde,
Fig. 4 eine Ansicht der Vorrichtung von der Längsseite, wobei der Keramikkörper und der Klemmkörper entlang Linie IV-IV von Fig. 2 aufgeschnitten wurden und
Fig. 5 eine zweite Ausführung der Erfindung.

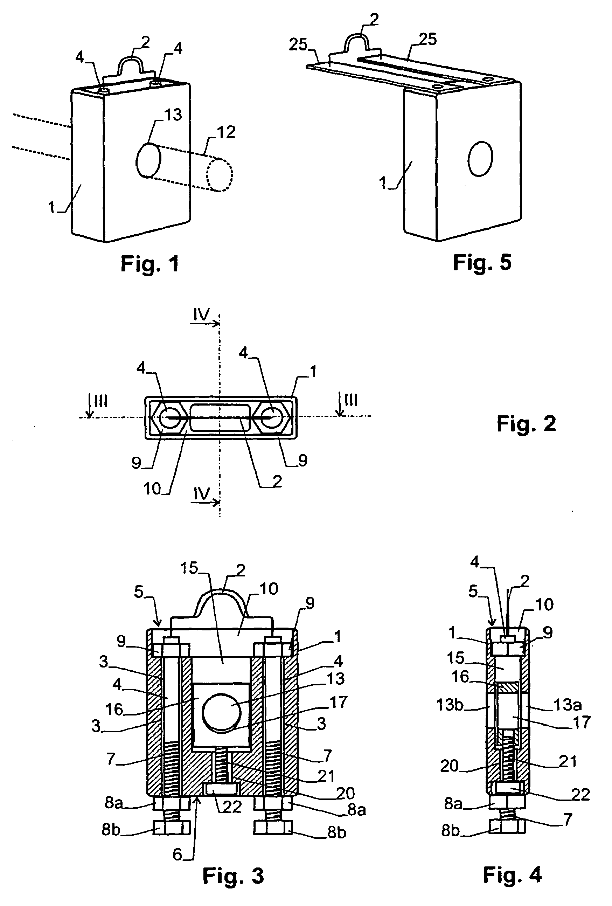

Die Vorrichtung gemäss Fig. 1 - 4 besitzt eine Halterung 1 und einen Drahtbügel 2.

Die Halterung 1 besitzt im wesentlichen quaderförmigem Umriss. Sie wird von einem vorzugsweise einststückigen Keramikkörper gebildet. Durch die Halterung 1 erstrecken in zwei parallelen Längslöchern 3 zwei Kontaktelemente 4. Jedes Kontaktelement 4 besteht aus einem im zylindrischen Stab, der in der vorliegenden Ausführung je ein Ende des Drahtbügels 2 trägt, und zwar auf einer ersten Seite 5 der Halterung 1. Auf der gegenüberliegenden, zweiten Seite 6 der Halterung 1 ist der zylindrische Stab jedes Kontaktelements 4 mit einem Gewinde 7 versehen, auf welches zwei Muttern 8a, 8b aufgeschraubt sind. Diese Muttern dienen zum Festmachen des Kontaktelements und bilden den Anschluss für eine Stromzuführung.

Auf der ersten Seite 5 der Halterung 1 trägt jedes Kontaktelement 4 je eine Ausformung 9 von z.B. polygonalem (oder anderem, nicht rotationssymmetrischem) Querschnitt. Die Ausformungen 9 liegen gemeinsam in einer Vertiefung 10 auf der ersten Seite 5 des Keramikkörpers der Halterung 1. Die Breite der Vertiefung 10 ist so gewählt, dass sie ein Verdrehen der Ausformungen 9 verhindert, so dass das jeweilige Kontaktelement 4 während dem Anziehen der Muttern 8a, 8b drehfest gehalten ist. Ausserdem liegen die Ausformungen 9 auf dem Boden der Vertiefung 10 auf und sichern die Kontaktelemente gegen die Zugkraft der Muttern 8a.

Zur Befestigung der Vorrichtung an einem Befestigungsstab 12 (siehe Fig. 1) einer Webmaschine ist in der Halterung 1 eine Befestigungsöffung 13 vorgesehen. Der Durchmesser der Befestigungsöffung 13 ist etwas grösser als der Durchmesser des Befestigungsstabs 12, so dass letzterer ohne grossen Kraftaufwand in die Befestigungsöffung 13 eingeschoben werden kann.

Die Befestigungsöffnung 13 wird von zwei Fenstern 13a, 13b gebildet, die sich zwischen den Aussenwänden und einem Innenraum 15 der Halterung 1 befinden (siehe Fig. 4). Der Innenraum 15 ist gegen die erste Seite 5 der Halterung 1 hin offen und nimmt verschiebbar einen Klemmkörper 16 auf, der eine Klemmvorrichtung bildet. Der Klemmkörper 16 ist in der vorliegenden Ausführung als Metallblock mit im wesentlichen quaderförmigem Umriss ausgestaltet. Durch den Klemmkörper 16 erstreckt sich eine Klemmöffnung 17. Die Achse der Klemmöffung 17 des Klemmkörpers 16 ist parallel zur Verbindungsachse der Fenster 13a, 13b. Der Durchmesser der Klemmöffnung 17 ist vorzugsweise etwas grösser als jener der Befestigungsöffnung 13, so dass es auch bei leichter Dejustierung des Klemmkörpers 16 möglich ist, den Befestigungsstab 12 durch die Fenster 13a, 13b und die Klemmöffung 17 einzuführen.

Von der zweiten Seite 6 der Halterung 1 erstreckt sich ein Loch 20 zum Inneraum 15. In diesem Loch ist eine Schraube 21 angeordnet, deren Gewinde in ein Innengewinde des Klemmkörpers 16 eingreift. Die Schraube 21 bildet ein Fixierungsmittel, mit welchem der Klemmkörper 16 bzw. die Klemmvorrichtung relativ zum Keramikkörper der Halterung 1 bewegt werden kann. Wird die Schraube 21 bei eingeführtem Befestigungsstab 12 angezogen, so zieht sie den Klemmkörper 16 gegen die zweite Seite 6 des Haltekörpers, so dass der Klemmkörper 16 den Befestigungsstab 12 gegen die Ränder der Befestigungsöffnung 13 drückt und festklemmt. Dabei ist der Kopf 22 der Schraube 21 gegen den Keramikkörper abgestützt und der Keramikkörper wird auf Druck belastet - da Keramik Druckkräfte besser als Zugkräfte aufnimmt, wird auch bei festem Anziehen der Schraube 21 eine Beschädigung des Keramikkörpers verhindert.

Wie insbesondere aus Fig. 3 ersichtlich, ist der Klemmkörper 16 bzw. die Klemmvorrichtung platzsparend zwischen den Kontaktelementen 4 angeordnet und kann mit der Schraube 21 parallel zu Längsachsen der Kontaktelemente bewegt werden.

Wie aus Fig. 4 ersichtlich, weitet sich die Vertiefung 10 gegen aussen schrittweise oder kontinuierlich auf. Dadurch wird das Entformen des Keramikkörpers der Halterung 1 vereinfacht.

Im bisher gezeigten Ausführungsbeispiel wird als Fixierungsmittel für den Klemmkörper 16 die Schraube 21 verwendet, die in ein Gewinde des Klemmkörpers 16 eingreift. Denkbar ist auch, das Gewinde für die Schraube 21 am Keramikkörper an der Innenseite des Lochs 20 vorzusehen, z.B. indem ein Gewindeträger aus Metall in den Keramikkörper eingelassen wird oder indem das Gewinde am Keramikkörper selbst ausgeformt wird. In diesem Fall drückt die Spitze der Schraube gegen eine Aussenfläche des Klemmkörpers 16. Diese Lösung führt jedoch zu etwas höheren Zugspannungen im Keramikkörper, weshalb die Lösung gemäss den Figuren bevorzugt wird.

In einer weiteren Ausführung, welche in Fig. 5 dargestellt ist, wird der Drahtbügel 2 nicht direkt auf den Kontaktelementen 4 befestigt, sondern die Kontaktelemente 4 sind mit zwei Leitern 25 verbunden. Der Drahtbügel 2 ist an den Enden der Leiter 25 befestigt. Die Ausführung nach Fig. 5 kann z.B. zum Einsatz kommen, wenn die Halterung 1 unmittelbar am Ort des Schnitts keinen Platz findet.

Die erfindungsgemässe Vorrichtung kann zum Trennen von textilen Flächengebilden, wie z.B. von Geweben oder Gestricken aus Kunstfasern, verwendet werden. Vorzugsweise wird sie zum Bearbeiten der Gewebekante am Rand der Stoffbahn einer Webmaschine angeordnet.

## Patentansprüche

1. Vorrichtung zum Trennen von textilen Flächengebilden mit einer Halterung, mit zwei in der Halterung angordneten Kontaktelementen (4) und einem beheizbaren, mit den Kontaktelementen (4) verbundenen Drahtbügel (2), **dadurch gekennzeichnet, dass** die Halterung einen Keramikkörper (1) aufweist, in welchem die beiden Kontaktelemente (4) gehalten sind.

2. Vorrichtung nach Anspruch 1, wobei im Keramikkörper (1) eine Befestigungsöffnung (13) vorgesehen ist zur Aufnahme eines Befestigungsstabs, und wobei die Halterung ferner eine Klemmvorrichtung und ein Fixierungsmittel aufweist, wobei mit dem Fixierungsmittel eine Kraft, insbesondere eine Zugkraft, auf die Klemmvorrichtung ausübbar ist, und wobei durch Ausüben der Kraft bzw. Zugkraft die Klemmvorrichtung den in die Befestigungsöffnung (13) eingeführten Befestigungsstab gegen einen Rand der Befestigungsöffnung (13) drückt.

3. Vorrichtung nach Anspruch 2, wobei die Klemmvorrichtung mit dem Fixierungsmittel relativ zum Keramikkörper (1) bewegbar ist.

4. Vorrichtung nach einem der Ansprüche 2 oder 3, wobei das Fixierungsmittel eine Schraube (21) umfasst, welche am Keramikkörper (1) abgestützt ist, und insbesondere wobei ein Kopf (22) der Schraube (21) gegen den Keramikkörper (1) abgestützt ist.

5. Vorrichtung nach Anspruch 4, wobei die Schraube (21) in ein in der Klemmvorrichtung angeordnetes Gewinde eingreift.

6. Vorrichtung nach einem der vorangehenden Ansprüche, 2 bis 5, wobei die Klemmvorrichtung einen Klemmkörper (16) umfasst, in welchem eine Klemmöffnung (17) zur Aufnahme des in der Befestigungsöffnung (13) angeordneten Befestigungsstabs vorgesehen ist, und insbesondere wobei die Klemmöffnung (17) einen grösseren Durchmesser als die Befestigungsöffnung (13) aufweist.

7. Vorrichtung nach Anspruch 6, wobei der Klemmkörper (16) aus Metall ist und/oder wobei im Klemmkörper (16) ein Gewinde vorgesehen ist.

8. Vorrichtung nach einem der Ansprüche 2 bis 7, wobei die Klemmvorrichtung verschiebbar in einem Innenraum (15) des Keramikkörpers (1) angeordnet ist, und wobei die Befestigungsöffnung (13) durch zwei auf gegenüber liegenden Seiten des Innenraums (15) angeordnete Fenster (13a, 13b) im Keramikkörper (1) gebildet wird.

9. Vorrichtung nach einem der Ansprüche 2 bis 8, wobei die Klemmvorrichtung zwischen den Kontaktelementen (4) angeordnet, ist und insbesondere wobei die Klemmvorrichtung mit dem Fixierungsmittel parallel zu den Kontaktelementen (4) verschiebbar ist.

10. Vorrichtung nach einem der vorangehenden Ansprüche, wobei die Kontaktelemente (4) sich durch den Keramikkörper (1) erstrecken, an einer ersten Seite (5) des Keramikkörpers (1) mit dem Drahtbügel (2) oder mit Leitern (25) zum Drahtbügel (2) verbunden sind und auf einer zweiten Seite (6) des Keramikkörpers (1) mit Anschlüssen (8a, 8b) für eine Stromzuführung verbunden sind.

11. Vorrichtung nach Anspruch 10, wobei jedes Kontaktelement (4) auf der zweiten Seite (6) ein Gewinde (7) aufweist, auf welchem eine Mutter (8a) aufgeschraubt und gegen den Keramikkörper (1) angezogen ist, wobei jedes Kontaktelement (4) ferner eine nicht-rotationssymmetrische Ausformung (9) besitzt, welche drehfest in einer Vertiefung (10) des Keramikkörpers (1) liegt, so dass das Kontaktelement (4) während dem Anziehen der Mutter (8a) drehfest gehalten ist.

12. Vorrichtung nach Anspruch 11, wobei die Vertiefung (10) durch eine Vertiefung in der ersten Seite des Keramikkörpers (1) gebildet ist, und insbesondere wobei sich die Vertiefung (10) gegen aussen schrittweise oder kontinuierlich aufweitet.

13. Vorrichtung nach einem der Ansprüche 11 oder 12, wobei die Ausformung (9) das Kontaktelement (4) gegen den Zug durch die Mutter (8a) sichert.

14. Verwendung der Vorrichtung nach einem der vorangehenden Ansprüche zum Trennen von textilen Flächengebilden in einer Webmaschine.

15. Webmaschine mit einer Vorrichtung nach einem der vorangehenden Ansprüche 1 bis 13.

## Claims

1. An apparatus for a severing of planar textile structures with a mount, with two contact elements (4) arranged in the mount and a heatable wire hoop (2) connected to the contact elements (4), **characterized in that** the mount comprises a ceramics body (1) in which both contact elements (4) are retained.

2. The apparatus according to claim 1, wherein a mounting opening (13) for receiving a mounting rod is provided in the ceramics body (1), and wherein the mount further comprises a clamping device and an arresting device, wherein by means of the arresting device a force, especially a pulling force, can be exerted onto the clamping device, and wherein by exertion of the force or pulling force the clamping device urges the mounting rod inserted in the mounting opening (13) towards an edge of the mounting opening (13).

3. The apparatus according to claim 2, wherein the clamping device with the arresting device is moveable relative to the ceramics body (1).

4. The apparatus according to one of the claims 2 or 3, wherein the arresting device comprises a screw (21) supported against the ceramics body (1) and in particular wherein a head (22) of the screw (21) is supported against the ceramics body.

5. The apparatus according to claim 4, wherein the screw (21) engages a threading arranged in the clamping device.

6. The apparatus according to one of the preceding claims 2 to 5, wherein the clamping device comprises a clamping body (16) having a clamping opening (17) for the receipt of the mounting rod located in the mounting opening (13), and in particular wherein the clamping opening (17) has a larger diameter than the mounting opening (13).

7. The apparatus according to claim 6, wherein the clamping body (16) is of metal and/or a threading is foreseen in the clamping body (16).

8. The apparatus according to one of the claims 2 to 7, wherein the clamping device is arranged displaceably in an inner chamber (15) of the ceramics body (1), and wherein the mounting opening (13) is formed by two windows (13a, 13b) in the ceramic body (1) located at two opposite sides of the inner chamber (15).

9. The apparatus according to one of the claims 2 to 8, wherein the clamping device is located between the contact elements (4) and especially wherein the clamping device is displaceable parallel to the contact elements (4) together with the arresting device.

10. The apparatus according to one of the preceding claims, wherein the contact elements (4) extend through the ceramic body (1), are connected at a first side (5) of the ceramic body (1) to the wire hoop (2) or conductors (25) to the wire hoop (2) and, at a second side (6) of the ceramic body (1), to connectors (8a, 8b) for a power supply.

11. The apparatus according to claim 10, wherein each contact element (4) comprises a thread (7) at the second side (6) and a nut (8a) is screwed onto the thread and tightened against the ceramics body (1), wherein each contact element (4) further comprises a non-rotationally-symmetrical structure (9) which lies locked against rotation in a recess (10) of the ceramics body (1), so that the contact element (4) is held locked against rotation during a tightening of the nut (8a).

12. The apparatus according to claim 11, wherein the recess (10) is formed by a recess in the first side of the ceramics body (1), and especially wherein the recess (10) widens step-wise or continuously towards the outside.

13. The apparatus according to one of the claims 11 or 12, wherein the structure (9) is adapted to arrest the contact element (4) against the pull from the nut (8a).

14. Use of the apparatus according to one of the preceding claims for a severing of planar textile structures in a weaving loom.

15. A weaving loom comprising an apparatus according to one of the preceding claims 1 to 13.

## Revendications

1. Dispositif de séparation de produits plats textiles avec fixation, ayant deux éléments de contact (4) agencés dans la fixation et une courbe de fil chauffante raccordée aux éléments de contact (4), **caractérisé en ce que** la fixation présente un corps céramique (1), dans lequel les deux éléments de contact (4) sont maintenus.

2. Dispositif selon la revendication 1, dans lequel une ouverture de fixation (13) est prévue dans le corps céramique (1) pour le logement d'un bâtonnet de fixation et dans lequel la fixation présente encore un dispositif de serrage et un moyen de fixation, une force, en particulier une force de traction, s'exerçant par le moyen de fixation sur le dispositif dé serrage et par l'exercice de cette force ou, selon le cas, force de traction, le dispositif de serrage comprimant le bâtonnet de fixation introduit dans l'ouverture de fixation (13) contre un bord de l'ouverture de fixation (13).

3. Dispositif selon la revendication 2, dans lequel le dispositif de serrage avec le moyen de fixation se déplace par rapport au corps céramique (1).

4. Dispositif selon l'une des revendications 2 ou 3, dans lequel le moyen de fixation comprend une vis, laquelle s'appuie sur le corps céramique (1) et en particulier dans lequel 1 une tête (2) de la vis (21) s'appuie contre le corps céramique (1).

5. Dispositif selon la revendication 4, dans lequel la vis (21) s'engage dans un filet agencé dans le dispositif de serrage.

6. Dispositif selon l'une des revendications précédentes, 2 à 5, dans lequel le dispositif de serrage comporte un corps de serrage (16), dans lequel une ouverture de serrage (17) est prévue pour le logement du bâtonnet de fixation agencé dans l'ouverture de fixation (13), et en particulier dans lequel l'ouverture de serrage (17) présente un diamètre plus grand que l'ouverture de fixation (13).

7. Dispositif selon la revendication 6, dans lequel le corps de serrage (16) est en métal et/ou dans lequel un filet est prévu dans le corps de serrage (16).

8. Dispositif selon l'une des revendications 2 à 7, dans lequel le dispositif de serrage peut coulisser dans un espace intérieur (15) du corps céramique (1) et dans lequel l'ouverture de fixation (13) est formée par deux fenêtres (13a, 13b) du corps céramique (1) qui sont agencées sur les côtés opposés de l'espace intérieur (15).

9. Dispositif selon l'une des revendications 2 à 8, dans lequel le dispositif de serrage est agencé entre les éléments de contact (4) et en particulier dans lequel le dispositif de serrage peut coulisser avec le moyen de fixation en parallèle aux éléments de contact (4).

10. Dispositif selon l'une des revendications précédentes, dans lequel les éléments de contact (4) s'étendent à travers le corps céramique (1) avec la courbe de fil (2), sont reliés sur un premier côté (5) du corps céramique (1) avec la courbe de fil (2) ou avec des conducteurs (25) vers la courbe de fil (2) et sont reliés sur un deuxième côté (6) du corps céramique (1) avec des connexions (8a, 8b) pour une arrivée de courant.

11. Dispositif selon la revendication 10, dans lequel chaque élément de contact (4) sur le deuxième côté (6) présente un filet (7), sur lequel un écrou (8a) est vissé et serré contre le corps céramique (1), chaque élément de contact (4) possédant en outre une déformation (9) asymétrique par rapport au mouvement rotatif, laquelle est située immobile dans un évidement (10) du corps céramique (1), de sorte que l'élément de contact (4) soit maintenu contre toute rotation pendant le serrage de l'écrou (8a).

12. Dispositif selon la revendication 11, dans lequel l'évidement (10) est formé par un évidement dans la première partie du corps céramique (1), et en particulier dans lequel l'évidement (10) s'élargit vers l'extérieur par paliers ou en continu.

13. Dispositif selon l'une des revendication 11 ou 12, dans lequel la déformation (9) fixe l'élément de contact (4) contre la traction par l'écrou (8a).

14. Utilisation du dispositif selon l'une des revendications précédentes pour la séparation de produits plats textiles dans une machine à tisser.

15. Machine à tisser avec dispositif selon l'une des revendications précédentes 1 à 13.
